(19) Europäisches Patentamt
European Patent Office
Office européen des brevets

(11) **EP 4 386 592 A1**

(12) **EUROPEAN PATENT APPLICATION**
published in accordance with Art. 153(4) EPC

(43) Date of publication:
**19.06.2024 Bulletin 2024/25**

(21) Application number: **22855927.4**

(22) Date of filing: **12.08.2022**

(51) International Patent Classification (IPC):
**G06F 21/44** (2013.01)

(52) Cooperative Patent Classification (CPC):
**G06F 21/44**

(86) International application number:
**PCT/JP2022/030801**

(87) International publication number:
**WO 2023/017865 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.08.2021 JP 2021131928**

(71) Applicants:
• **Giga System, Inc.**
**Osaka-shi, Osaka 532-0011 (JP)**

• **SuccessKnowledge, LLC.**
**Yokohama-shi, Kanagawa 222-0002 (JP)**

(72) Inventors:
• **IMAI, Kazuho**
**Osaka-shi, Osaka 532-0011 (JP)**
• **TAKANO, Toru**
**Osaka-shi, Osaka 532-0011 (JP)**
• **TAMAI, Shigetomo**
**Yokohama-shi, Kanagawa 222-0002 (JP)**

(74) Representative: **Zimmermann & Partner
Patentanwälte mbB
Postfach 330 920
80069 München (DE)**

(54) **AUTHENTICATION SYSTEM, AUTHENTICATION MODULE, AND AUTHENTICATION PROGRAM**

(57) In the present disclosure, a first authentication module acquires first authentication data in which first authentication information generated based on first identification information specific to the first authentication module and second identification information specific to a second authentication module and second authentication information generated based on the first authentication information, the first identification information, and the second identification information are associated with each other. The second authentication module acquires second authentication data in the same configuration as the first authentication data. The first authentication module transmits the first authentication information of the first authentication data to the second authentication module, receives reply information from the second authentication module, executes authentication by comparison between the reply information and the second authentication information associated with the first authentication information transmitted from the first authentication module to the second authentication module, in the first authentication data, and decides whether or not to continue a communication session with the second authentication module based on a result of the authentication.

FIG.4

**Description**

Technical Field

The present disclosure relates to an authentication system, an authentication module, and an authentication program.

Background Art

Conventionally, there has been known a technology for performing authentication at the time of performing communication between apparatuses such as a client apparatus and a service server apparatus that are mutually communicably connected. In such a technology, the authentication is performed via an authentication server apparatus that intervenes between the apparatuses (that is, between authentication modules requiring authentication).

Citation List

Patent Literature

Patent Literature 1: Japanese Patent No. 4344783

Summary of Invention

Technical Problem

In the conventional technology as described above, when the authentication sever apparatus stops, it becomes impossible to perform authentication even if the authentication modules are normally operating, and, therefore, the operation of a system related to authentication may be unstable. Further, since it is necessary to provide the authentication server apparatus between the authentication modules, the configuration and process of the system related to authentication is complicated.

Therefore, one of problems to be solved by the present disclosure is to provide an authentication system capable of stabilizing the operation of the system related to authentication and simplifying the configuration thereof, an authentication module, and an authentication program.

Solution to Problem

An authentication system as an example of the present disclosure includes a first authentication module and a second authentication module that are mutually communicably connected, wherein the first authentication module comprises a first acquisition unit, the first acquisition unit configured to acquire first authentication data in which first authentication information and second authentication information are associated with each other, the first authentication information being generated by a first generation logic based on first identification information specific to the first authentication module and second identification information specific to the second authentication module, the second authentication information being generated by a second generation logic based on the first authentication information, the first identification information, and the second identification information; the second authentication module comprises: a second acquisition unit configured to acquire second authentication data in a same configuration as the first authentication data in which the first authentication information and the second authentication information are associated with each other; and a second control unit configured to reply, when the first authentication information of the first authentication data is received from the first authentication module, to the first authentication module with the second authentication information, as reply information, which is associated with the first authentication information corresponding to the first authentication information received from the first authentication module in the second authentication data; and the first authentication module comprises a first control unit configured to transmit the first authentication information of the first authentication data to the second authentication module, to receive the reply information from the second authentication module, to execute authentication by comparison between the reply information and the second authentication information, which is associated with the first authentication information transmitted from the first authentication module to the second authentication module in the first authentication data, and to decide whether or not to continue a communication session with the second authentication module based on a result of the authentication.

An authentication module as another example of the present disclosure is an authentication module communicably connected to another authentication module, the authentication module comprising: a first acquisition unit configured to acquire first authentication data in which first authentication information and second authentication information are associated with each other, the first authentication information being generated by a first generation logic based on first identification information specific to the authentication module and second identification information specific to the other authentication module, second authentication information being generated by a second generation logic based on the first authentication information, the first identification information, and the second identification information; and a first control unit configured to: transmit the first authentication information of the first authentication data to the other authentication module configured to acquire second authentication data in a same configuration as the first authentication data; receive reply information from the other authentication module, the other authentication module being configured to reply, when receiving the first authentication information of the first authentication data from the authentication module, to the authentication module with the second authentication information as the reply information, which is associated with the first authentication information corresponding to the first authentication information received from the authentication module in the second authentication data; execute authentication by comparison between the reply information and the second authentication information associated with the first authentication information transmitted from the authentication module to the other authentication module, in the first authentication data; and decide whether or not to continue a communication session with the other authentication module based on a result of the authentication.

An authentication module as still another example of the present disclosure is an authentication module communicably connected to another authentication module, the authentication module comprising: a second acquisition unit configured to acquire second authentication data in which first authentication information and second authentication information are associated with each other, the first authentication information being generated by a first generation logic based on first identification information specific to the authentication module and second identification information specific to the other authentication module, the second authentication information being generated by a second generation logic based on the first authentication information, the first identification information, and the second identification information; and a second control unit configured to reply, when the first authentication information is received from the other authentication module having first authentication data in a same configuration as the second authentication data, to the other authentication module with the second authentication information as reply information, which is associated with the first authentication information corresponding to the first authentication information received from the other authentication module in the second authentication data.

An authentication program as still another example of the present disclosure is an authentication program causing a computer, which comprises an authentication module communicably connected to another authentication module, to execute: acquiring first authentication data in which first authentication information and second authentication information are associated with each other, the first authentication information being generated by a first generation logic based on first identification information specific to the authentication module and second identification information specific to the other authentication module, the second authentication information being generated by a second generation logic based on the first authentication information, the first identification information, and the second identification information; and transmitting the first authentication information of the first authentication data to the other authentication module configured to acquire second authentication data in a same configuration as the first authentication data; receiving reply information from the other authentication module, the other authentication module being configured to reply, when the first authentication information of the first authentication data is received from the authentication module, to the authentication module as the reply information with the second authentication information, which is associated with the first authentication information corresponding to the first authentication information received from the authentication module in the second authentication data; executing authentication by comparison between the reply information and the second authentication information, which is associated with the first authentication information transmitted from the authentication module to the other authentication module in the first authentication data; and deciding whether or not to continue a communication session with the other authentication module based on a result of the authentication.

An authentication program as still another example of the present disclosure is an authentication program for causing a computer, which comprises an authentication module communicably connected to another authentication module, to execute: acquiring second authentication data in which first authentication information and second authentication information are associated with each other, the first authentication information being generated by a first generation logic based on first identification information specific to the authentication module and second identification information specific to the other authentication module, the second authentication information being generated by a second generation logic based on the first authentication information, the first identification information, and the second identification information; and replying, when the first authentication information is received from the other authentication module having first authentication data in a same configuration as the second authentication data, to the other authentication module with the second authentication information as reply information, which is associated with the first authentication information corresponding to the first authentication information received from the other authentication module in the second authentication data.

Brief Description of Drawings

[Figure 1] Figure 1 is an illustrative and schematic diagram showing an authentication system according to an embodiment.
[Figure 2] Figure 2 is an illustrative and schematic block diagram showing a functional configuration of each of an edge server and a terminal as an authentication module according to the embodiment.
[Figure 3] Figure 3 is an illustrative and schematic diagram showing a configuration of authentication data according to the embodiment.
[Figure 4] Figure 4 is an illustrative and schematic sequence diagram showing an example of a flow of authentication performed by the authentication system according to the embodiment.
[Figure 5] Figure 5 is an illustrative and schematic block diagram showing a hardware configuration of a computer constituting the authentication module according to the embodiment.

Description of Embodiment

Hereinafter, an embodiment (and modifications) of an authentication system, an authentication module, and an authentication program according to the present disclosure will be described based on drawings. A configuration of the embodiment described below, and the operation and effects brought about by the configuration are mere examples and are not limited to the content described below.
In the present disclosure, though ordinal numbers such as "first" and "second" are used as needed, these ordinal numbers are used for the purpose of convenience of identification and do not indicate specific priority.

<Embodiment>

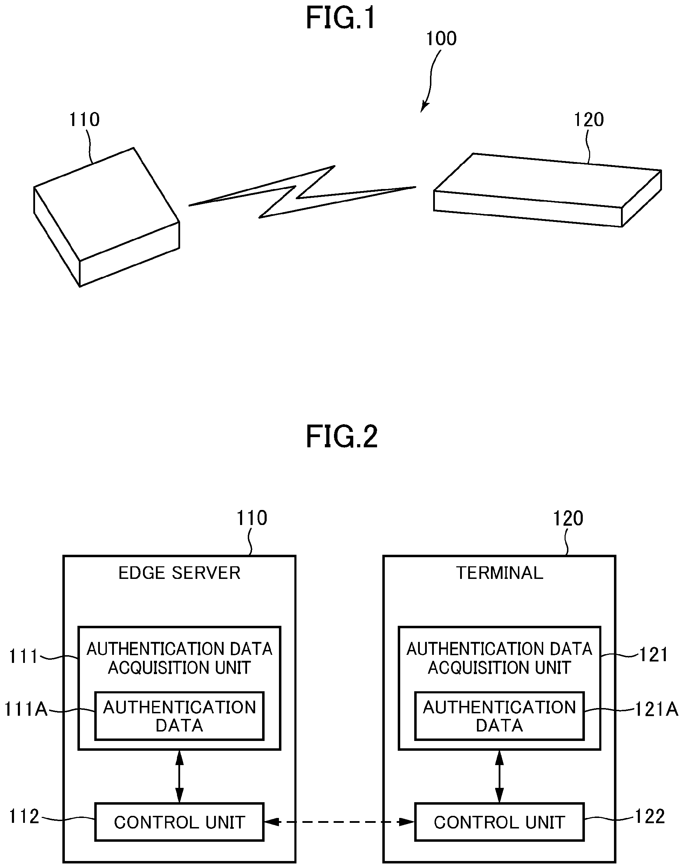

Figure 1 is an illustrative and schematic diagram showing an authentication system 100 according to the embodiment.
As shown in Figure 1, the authentication system 100 according to the embodiment includes an edge server 110 and a terminal 120 that are mutually communicably connected via a network (not shown). The edge server 110 and the terminal 120 are configured as authentication modules that authenticate each other at the time of performing communication.
The configuration shown in Figure 1 is a mere example. For example, though Figure 1 shows the authentication system 100 with the simplest configuration in which the edge server 110 and the terminal 120 are provided in a one-to-one relationship, the edge server 110 and the terminal 120 may be in a one-to-many relationship or in a many-to-many relationship.
As a conventional technology for performing authentication between authentication modules like the edge server 110 and the terminal 120 shown in Figure 1, a technology for performing authentication via an authentication server apparatus that intervenes between the authentication modules has been known.
In the conventional technology as described above, when the authentication sever apparatus stops, it becomes impossible to perform authentication even if the authentication modules are normally operating, and, therefore, the operation of a system related to authentication may be unstable. Further, since it is necessary to provide the authentication server apparatus between the authentication modules, the configuration of the system related to authentication is complicated.
Furthermore, in the conventional technology as described above, it is necessary to perform authentication about whether the authentication sever apparatus is authorized or not in the first place. For this purpose, it is necessary to transmit and receive seeds used for authentication between the authentication server apparatus and the authentication modules. If the seeds are illegally captured by hacking, however, security is not ensured.
Therefore, in the embodiment, by causing the edge server 110 and the terminal 120 as authentication modules to have functions as shown in Figure 2, the operation of the authentication system 100 is stabilized, and the configuration thereof is simplified. Furthermore, security is enhanced.
Figure 2 is an illustrative and schematic block diagram showing a functional configuration of each of the edge server 110 and the terminal 120 as the authentication module according to the embodiment.
As shown in Figure 2, the edge server 110 includes an authentication data acquisition unit 111 and a control unit 112, and the terminal 120 includes an authentication data acquisition unit 121 and a control unit 122.
The authentication data acquisition unit 111 of the edge server 110 acquires authentication data 111A used for authentication with the terminal 120. The authentication data acquisition unit 111 may acquire the authentication data 111A by generating the authentication data 111A by a predetermined logic (details of which will be described later) each time authentication is to be performed or may acquire the authentication data 111A by receiving the authentication data 111A generated, for example, by an external apparatus in advance from the external apparatus.

Similarly, the authentication data acquisition unit 121 of the terminal 120 acquires authentication data 121A used for authentication with the edge server 110. The authentication data acquisition unit 121 may acquire the authentication data 121A by generating the authentication data 121A by a predetermined logic (details of which will be described later) each time authentication is to be performed or may acquire the authentication data 121A by receiving the authentication data 121A generated, for example, by an external apparatus in advance from the external apparatus.

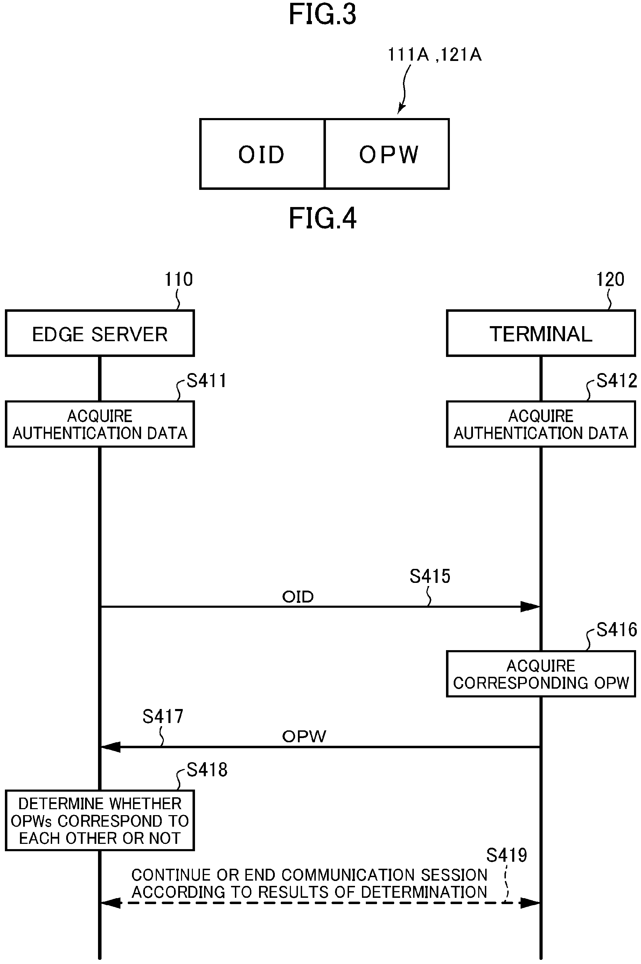

In the embodiment, the authentication data 111A on the edge server 110 side and the authentication data 121A on the terminal 120 side have the same configuration. More specifically, both of the authentication data 111A and the authentication data 121A have a configuration as shown in Figure 3.

Figure 3 is an illustrative and schematic diagram showing the configuration of the pieces of authentication data 111A and 121A according to the embodiment.

As shown in Figure 3, each of the pieces of authentication data 111A and 121A includes an OID (a one-time ID) and an OPW (a one-time password) that are associated with each other. The OID is first authentication information generated by a first generation logic based on identification information specific to the edge server 110 and identification information specific to the terminal 120, and the OPW is second authentication information generated by a second generation logic based on the OID and the identification information of each of the edge server 110 and the terminal 120.

For example, the first generation logic according to the embodiment is expressed by Formula (10) below using a pseudorandom function PRF (). In the embodiment, it is assumed that the pseudorandom function PRF () outputs a pseudorandom number with as many digits as possible, as far as a collision does not occur in practice.

$$OID=PRF\ (secret,\ seed)...(10)$$

In Formula (10) above, "secret" is a value based on the identification information specific to the edge server 110 and the identification information specific to the terminal 120 (for example, a hash value). For example, in the embodiment, a MAC address as address information on the network about the edge server 110 is used as the identification information specific to the edge server 110, and a MAC address as address information on the network about the terminal 120 is used as the identification information specific to the terminal 120. Therefore, if the MAC address of the edge server 110 is, for example, "01-23-45-67-89-aa," and the MAC address of the terminal 120 is, for example, "01-23-45-67-89-ab," then "secret" is expressed by Formula (11) below using a hash function hash ().

$$secret=hash\ ("01-23-45-67-89-aa+01-23-45-67-89-ab")...(11)$$

Further, in Formula (10) above, "seed" is variable information that changes synchronously between the edge server 110 and the terminal 120 each time a communication session between the edge server 110 and the terminal 120 starts. More specifically, "seed" is counter information that varies (that is regularly incremented or decremented) each time a communication session between the edge server 110 and the terminal 120 starts.

From the above, it is understood that, according to the first generation logic according to the embodiment, it is possible to generate a different unique OID for each communication session based on the MAC addresses as pieces of information that are unique independent of communication sessions and the counter information that varies for each communication session.

The second generation logic according to the embodiment is expressed by Formula (20) below using a unique function Pwlog (). In the embodiment, the unique function Pwlog () is, for example, a hash function that is uniquely designed to output a hash value with as many digits as possible, as far as a collision does not occur in practice.

$$OPW=Pwlog\ (OID,\ secret)...(20)$$

In Formula (20) above, "OID" and "secret" are the same as those that appear in Formula (10) above. Therefore, it is understood that, according to the second generation logic according to the embodiment, it is possible to generate a different unique OPW for each communication session based on the unique OID that is different for each communication session and the counter information that varies for each communication session.

Returning to Figure 2, when a communication session between the edge server 110 and the terminal 120 starts, the control unit 112 of the edge server 110 and the control unit 122 of the terminal 120 mutually perform peer-to-peer authentication using the pieces of authentication data 111A and 121A described above, and decide whether or not to continue the current communication session based on a result of the authentication. The authentication is performed, for example, in a flow shown in Figure 4.

Figure 4 is an illustrative and schematic sequence diagram showing an example of a flow of authentication performed by the authentication system 100 according to the embodiment.

In the example shown in Figure 4, first, at step S411, the authentication data acquisition unit 111 of the edge server 110 acquires the authentication data 111A that includes the pair of an OID and an OPW as described before. Similarly, at step S412, the authentication data acquisition unit 121 of the terminal 120 also acquires the authentication data 121A that includes the pair of the OID and the OPW as described before.

Then, at step S415, the control unit 112 of the edge server 110 transmits the OID of the authentication data 111A acquired at step S411 to the terminal 120. Then, at step S416, the control unit 122 of the terminal 120 acquires, from the authentication data 121A acquired at step S412, the OPW associated with the OID corresponding to the OID received from the edge server 110.

Then, at step S417, the control unit 122 of the terminal 120 replies to the edge server 110 with the OPW acquired at step S416 as reply information. Then, at step S418, the control unit 112 of the edge server 110 acquires, from the authentication data 111A acquired at step S411, the OPW associated with the OID transmitted from the edge server 110 to the terminal 120 at step S415, and determines whether the OPW acquired from the authentication data 111A and the OPW received from the terminal 120 as the reply information at step S417 correspond to each other or not.

Then, at step S419, the control unit 112 of the edge server 110 continues or ends the current communication session according to a result of the determination at step S418. For example, if the result of the determination at step S418 indicates that the OPWs correspond to each other, the control unit 112 continues the current communication session; and, if the result of the determination at step S418 indicates that the OPWs do not correspond to each other, the control unit 112 ends the communication session. In this way, the authentication according to the embodiment is autonomously performed between the edge server 110 and the terminal 120 without intervention of a relay apparatus, for example, an authentication server, intervention by a person who performs an operation, and the like.

Though Figure 4 shows an example in which a communication session starts originating from the edge server 110 side, a communication session may start originating from the terminal 120 side in the embodiment. In this case, authentication can be performed in a form in which the subjects of the process at and after step S413 shown in Figure 4 are reversed. Therefore, in the embodiment, the control unit 112 of the edge server 110 and the control unit 122 of the terminal 120 can have mutually equal functions.

As described above, the authentication system 100 according to the embodiment includes the edge server 110 and the terminal 120 as authentication modules (a first authentication module and a second authentication module) that are mutually communicably connected. In the description below, the edge server 110 is associated with the first authentication module, and the terminal 120 is associated with the second authentication module, but this is merely for simplification of the description. The description below similarly holds in a case where the terminal 120 is associated with the first authentication module, and the edge server 110 is associated with the second authentication module.

The first authentication module (the edge server 110) includes a first acquisition unit (the authentication data acquisition unit 111) that acquires first authentication data (the authentication data 111A) in which an OID as the first authentication information and an OPW as the second authentication information are associated with each other. The OID is generated by the first generation logic based on first identification information specific to the first authentication module (the edge server 110) and second identification information specific to the second authentication module (the terminal 120), and the OPW is generated by the second generation logic based on the OID, the first identification information, and the second identification information.

The second authentication module (the terminal 120) includes a second acquisition unit (the authentication data acquisition unit 121) that acquires second authentication data (the authentication data 121A) in the same configuration as the first authentication data (the authentication data 111A) in which the first authentication information and the second authentication information are associated with each other. The second authentication module (the terminal 120) includes a second control unit (the control unit 122) that replies, when the OID of the first authentication data (the authentication data 111A) is received from the first authentication module (the edge server 110), the OPW associated with the OID corresponding to the OID received from the first authentication module (the edge server 110), in the second authentication data (the authentication data 121A), to the first authentication module (the edge server 110) as reply information.

Here, in the embodiment, the first authentication module (the edge server 110) includes a first control unit (the control unit 112) that transmits the OID of the first authentication data (the authentication data 111A) to the second authentication module (the terminal 120) and receives the reply information from the second authentication module (the terminal 120). The first control unit (the control unit 112) executes authentication by comparison between the reply information and the OPW associated with the OID transmitted from the first authentication module (the edge server 110) to the second authentication module (the terminal 120), in the first authentication data (the authentication data 111A), and decides whether or not to continue a communication session with the second authentication module (the terminal 120) based on a result of the authentication.

According to the above configuration, authentication between the first authentication module (the edge server 110) and the second authentication module (the terminal 120) is realized without intervention of a relay apparatus such as an authentication server apparatus. Thereby, it is possible to stabilize the operation of the authentication system 100 and simplify the configuration thereof. Further, according to the above configuration, it is not necessary to transmit and receive seeds to and from a relay apparatus to authenticate whether the relay apparatus is authorized or not because the relay apparatus does not intervene. Therefore, such a situation that the seeds are illegally captured by hacking does not happen. Thereby, it is also possible to enhance security.

Further, in the embodiment, the first authentication module (the edge server 110) and the second authentication module (the terminal 120) are mutually communicably connected via a network. The first identification information and the second identification information are pieces of address information for identifying the first authentication module (the edge server 110) and the second authentication module (the terminal 120) on the network, respectively.

According to the above configuration, it is possible to easily configure the first identification information and the second identification information using the pieces of address information.

Further, in the embodiment, the OID is generated further based on variable information that changes synchronously between the first authentication module (the edge server 110) and the second authentication module (the terminal 120) each time a communication session between the first authentication module (the edge server 110) and the second authentication module (the terminal 120) starts.

According to the above configuration, it is possible to easily generate a different OID for each communication session using the variable information. In this case, even if external hacking occurs in a certain communication session, authentication fails when an OID illegally acquired by the hacking is used for another communication session. Therefore, it is possible to easily prevent illegal access.

In the embodiment, the variable information includes counter information that varies each time a communication session between the first authentication module (the edge server 110) and the second authentication module (the terminal 120) starts.

According to the above configuration, it is possible to easily configure the variable information using the counter information.

Further, in the embodiment, the first generation logic includes generation of the OID based on a pseudorandom number obtained by inputting a value based on at least the first identification information and the second identification information to a pseudorandom function (PRF ()).

According to the above configuration, it is possible to easily generate a unique OID using the pseudorandom function.

Further, in the embodiment, the second generation logic includes generation of the OPW based on a hash value obtained by inputting a value based on the OID, the first identification information, and the second identification information to a hash function (unique function Pwlog ()).

According to the above configuration, it is possible to easily generate a unique OPW using the hash function.

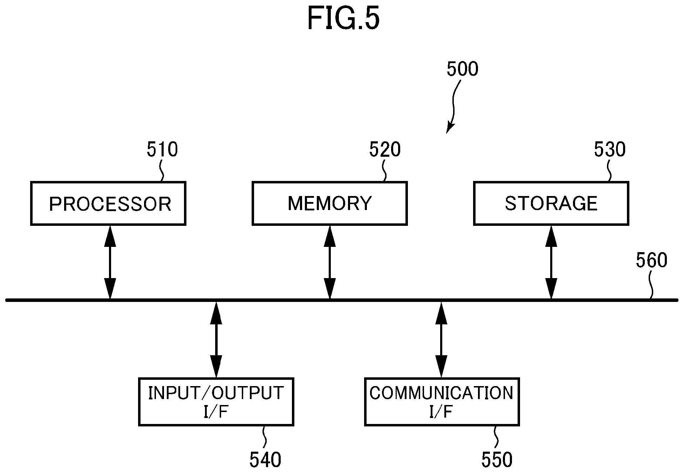

Finally, description will be made on a hardware configuration of the authentication module according to the embodiment described above (the edge server 110 and the terminal 120) will be described. The authentication module according to the embodiment is configured, for example, with a computer 500 having the hardware configuration as shown in Figure 5.

Figure 5 is an illustrative and schematic block diagram showing the hardware configuration of the computer 500 constituting the authentication module according to the embodiment.

As shown in Figure 5, the computer 500 is provided with a processor 510, a memory 520, a storage 530, an input/output interface (I/F) 540, and a communication interface (I/F) 550. These pieces of hardware are connected to a bus 560.

The processor 510 is configured, for example, as a CPU (central processing unit) and comprehensively controls operation of each unit of the computer 500.

The memory 520 includes, for example, a ROM (read-only memory) and a RAM (random access memory), and realizes volatile or nonvolatile storage of various kinds of data such as a program executed by the processor 510, provision of a work area for the processor 510 to execute the program, and the like.

The storage 530 includes, for example, an HDD (hard disk drive) or an SSD (solid state drive) and nonvolatilely stores various kinds of data.

The input/output interface 540 controls input of data, for example, from an input device (not shown) such as a keyboard and a mouse to the computer 500, and output of data, for example, from the computer 500 to an output device (not shown) such as a display and a speaker.

The communication interface 550 enables the computer 500 to execute communication with other apparatuses.

The functional configuration of each of the edge server 110 and the terminal 120 as the authentication module according to the embodiment (see Figure 2) is realized as a group of functional modules by cooperation between hardware and software as a result of the processor 510 executing an authentication program stored in the memory 520 or the storage 530 in advance. In the embodiment, however, a part or all of each group of functional modules shown in Figure 2 may be realized only by hardware like specifically designed circuitry.

The authentication program described above does not necessarily have to be stored in the memory 520 or the storage 530 in advance. For example, the authentication program described above may be provided as a computer program product obtained by recording the authentication program in an installable format or an executable format, in any of computer-readable media such as various kinds of magnetic disks like a flexible disk (FD) or various kinds of optical disks like a DVD (digital versatile disk).

Further, the authentication program described above may be provided or distributed via a network such as the Internet. That is, the authentication program described above may be provided in a form of, in a state of being stored in a computer connected to a network such as the Internet, accepting being downloaded via the network.

<Modifications>

In the embodiment described above, a configuration is exemplified in which authentication modules are the edge server 110 and the terminal 120 as separate electronic apparatuses communicably connected via a network. The "authentication module" of the present disclosure, however, is a concept that includes not only a physical configuration like an electronic apparatus but also a logical configuration like a software application. Therefore, the technology of the present disclosure is applicable to authentication between applications mounted on one electronic apparatus. In this case, the OID can be generated based on pieces of unique identification information (and variable information) for identifying the applications, and the OPW can be generated based on the OID and the pieces of unique identification information for identifying the applications. As the pieces of unique identification information for identifying the applications, for example, license numbers assigned for the applications, respectively, are conceivable.

Further, in the embodiment described above, a configuration is exemplified in which, as identification information specific to each authentication module, address information for identifying the authentication module on a network is used. In the present disclosure, however, the identification information may be information other than address information, for example, information optionally uniquely determined by a user, if the information can identify the authentication module.

Further, in the embodiment described above, a configuration is exemplified in which, as variable information that changes synchronously between authentication modules each time a communication session starts, counter information that is regularly incremented or decremented is used. In the present disclosure, however, the variable information may be information different from the counter information, which does not regularly vary, if the information changes synchronously between authentication modules each time a communication session starts.

Further, in the embodiment described above, a first generation logic using a pseudorandom function and a second generation logic using a hash function are exemplified. In the present disclosure, however, the first generation logic does not necessarily have to be a logic using a pseudorandom function if the logic can generate a unique OID. Similarly, the second generation logic does not necessarily have to be a logic using a hash function if the logic can generate a unique OPW that can be associated with an OID.

Some embodiments and modifications of the present disclosure have been described above. These embodiments and modifications, however, are presented as examples and are not intended to limit the scope of the invention. These novel embodiments and modifications can be practiced in other various forms, and various omissions, replacements, and changes can be made within a range not departing from the spirit of the invention. These embodiments and modifications are included in the scope and spirit of the invention and included in the invention described in Claims and the scope equal to the invention.

Reference Signs List

100    authentication system

110    edge server (authentication module, first authentication module)

120    terminal (authentication module, second authentication module)

111    authentication data acquisition unit (first acquisition unit)

111A    authentication data (first authentication data)

112    control unit (first control unit)

121     authentication data acquisition unit (second acquisition unit)

121A    authentication data (second authentication data)

122     control unit (second control unit)


**Claims**

1. An authentication system comprising a first authentication module and a second authentication module that are mutually communicably connected, wherein

   the first authentication module comprises a first acquisition unit, the first acquisition unit configured to acquire first authentication data in which first authentication information and second authentication information are associated with each other, the first authentication information being generated by a first generation logic based on first identification information specific to the first authentication module and second identification information specific to the second authentication module, the second authentication information being generated by a second generation logic based on the first authentication information, the first identification information, and the second identification information;
   the second authentication module comprises:

   a second acquisition unit configured to acquire second authentication data in a same configuration as the first authentication data in which the first authentication information and the second authentication information are associated with each other; and
   a second control unit configured to reply, when the first authentication information of the first authentication data is received from the first authentication module, to the first authentication module with the second authentication information, as reply information, which is associated with the first authentication information corresponding to the first authentication information received from the first authentication module in the second authentication data; and
   the first authentication module comprises a first control unit configured to transmit the first authentication information of the first authentication data to the second authentication module, to receive the reply information from the second authentication module, to execute authentication by comparison between the reply information and the second authentication information, which is associated with the first authentication information transmitted from the first authentication module to the second authentication module in the first authentication data, and to decide whether or not to continue a communication session with the second authentication module based on a result of the authentication.

2. The authentication system according to claim 1, wherein

   the first authentication module and the second authentication module are mutually communicably connected via a network; and
   the first identification information and the second identification information include pieces of address information for identifying the first authentication module and the second authentication module on the network, respectively.

3. The authentication system according to claim 1 or 2, wherein
   the first authentication information is generated further based on variable information that changes synchronously between the first authentication module and the second authentication module each time a communication session between the first authentication module and the second authentication module starts.

4. The authentication system according to claim 3, wherein
   the variable information includes counter information that varies each time a communication session between the first authentication module and the second authentication module starts.

5. The authentication system according to any one of claims 1 to 4, wherein
   the first generation logic comprises generation of the first authentication information based on a pseudorandom number obtained by inputting a value based on at least the first identification information and the second identification information to a pseudorandom function.

6. The authentication system according to any one of claims 1 to 5, wherein
the second generation logic comprises generation of the second authentication information based on a hash value obtained by inputting the first authentication information and a value based on the first identification information and the second identification information to a hash function.

7. An authentication module communicably connected to another authentication module, the authentication module comprising:

a first acquisition unit configured to acquire first authentication data in which first authentication information and second authentication information are associated with each other, the first authentication information being generated by a first generation logic based on first identification information specific to the authentication module and second identification information specific to the other authentication module, second authentication information being generated by a second generation logic based on the first authentication information, the first identification information, and the second identification information; and
a first control unit configured to:

transmit the first authentication information of the first authentication data to the other authentication module configured to acquire second authentication data in a same configuration as the first authentication data;
receive reply information from the other authentication module, the other authentication module being configured to reply, when receiving the first authentication information of the first authentication data from the authentication module, to the authentication module with the second authentication information as the reply information, which is associated with the first authentication information corresponding to the first authentication information received from the authentication module in the second authentication data;
execute authentication by comparison between the reply information and the second authentication information associated with the first authentication information transmitted from the authentication module to the other authentication module, in the first authentication data; and
decide whether or not to continue a communication session with the other authentication module based on a result of the authentication.

8. An authentication module communicably connected to another authentication module, the authentication module comprising:

a second acquisition unit configured to acquire second authentication data in which first authentication information and second authentication information are associated with each other, the first authentication information being generated by a first generation logic based on first identification information specific to the authentication module and second identification information specific to the other authentication module, the second authentication information being generated by a second generation logic based on the first authentication information, the first identification information, and the second identification information; and
a second control unit configured to reply, when the first authentication information is received from the other authentication module having first authentication data in a same configuration as the second authentication data, to the other authentication module with the second authentication information as reply information, which is associated with the first authentication information corresponding to the first authentication information received from the other authentication module in the second authentication data.

9. The authentication module according to claim 7 or 8, wherein

the authentication module and the other authentication module are mutually communicably connected via a network; and
the first identification information and the second identification information include pieces of address information for identifying the authentication module and the other authentication module on the network, respectively.

10. The authentication module according to any one of claims 7 to 9, wherein
the first authentication information is generated further based on variable information that changes synchronously between the authentication module and the other authentication module each time a communication session between the authentication module and the other authentication module starts.

11. The authentication module according to claim 10, wherein
the variable information includes counter information that varies each time a communication session between the authentication module and the other authentication module starts.

12. The authentication module according to any one of claims 7 to 11, wherein
the first generation logic comprises generation of the first authentication information based on a pseudorandom number obtained by inputting a value based on at least the first identification information and the second identification information to a pseudorandom function.

13. The authentication module according to any one of claims 7 to 12, wherein
the second generation logic comprises generation of the second authentication information based on a hash value obtained by inputting the first authentication information and a value based on the first identification information and the second identification information to a hash function.

14. An authentication program for causing a computer, which comprises an authentication module communicably connected to another authentication module, to execute:

acquiring first authentication data in which first authentication information and second authentication information are associated with each other, the first authentication information being generated by a first generation logic based on first identification information specific to the authentication module and second identification information specific to the other authentication module, the second authentication information being generated by a second generation logic based on the first authentication information, the first identification information, and the second identification information; and
transmitting the first authentication information of the first authentication data to the other authentication module configured to acquire second authentication data in a same configuration as the first authentication data;
receiving reply information from the other authentication module, the other authentication module being configured to reply, when the first authentication information of the first authentication data is received from the authentication module, to the authentication module as the reply information with the second authentication information, which is associated with the first authentication information corresponding to the first authentication information received from the authentication module in the second authentication data;
executing authentication by comparison between the reply information and the second authentication information, which is associated with the first authentication information transmitted from the authentication module to the other authentication module in the first authentication data; and
deciding whether or not to continue a communication session with the other authentication module based on a result of the authentication.

15. An authentication program for causing a computer, which comprises an authentication module communicably connected to another authentication module, to execute:

acquiring second authentication data in which first authentication information and second authentication information are associated with each other, the first authentication information being generated by a first generation logic based on first identification information specific to the authentication module and second identification information specific to the other authentication module, the second authentication information being generated by a second generation logic based on the first authentication information, the first identification information, and the second identification information; and
replying, when the first authentication information is received from the other authentication module having first authentication data in a same configuration as the second authentication data, to the other authentication module with the second authentication information as reply information, which is associated with the first authentication information corresponding to the first authentication information received from the other authentication module in the second authentication data.

16. The authentication program according to claim 14 or 15, wherein

the authentication module and the other authentication module are communicably connected via a network; and
the first identification information and the second identification information include pieces of address information for identifying the authentication module and the other authentication module on the network, respectively.

17. The authentication program according to any one of claims 14 to 16, wherein
the first authentication information is generated further based on variable information that changes synchronously between the authentication module and the other authentication module each time a communication session between the authentication module and the other authentication module starts.

18. The authentication program according to claim 17, wherein
the variable information includes counter information that varies each time a communication session between the authentication module and the other authentication module starts.

19. The authentication program according to any one of claims 14 to 18, wherein
the first generation logic comprises generation of the first authentication information based on a pseudorandom number obtained by inputting a value based on at least the first identification information and the second identification information to a pseudorandom function.

20. The authentication program according to any one of claims 14 to 19, wherein
the second generation logic comprises generation of the second authentication information based on a hash value obtained by inputting the first authentication information and a value based on the first identification information and the second identification information to a hash function.

# FIG.1

# FIG.2

# FIG.3

111A ,121A

| OID | OPW |
|-----|-----|

# FIG.4

# FIG.5

500

| 510 | 520 | 530 |
|---|---|---|
| PROCESSOR | MEMORY | STORAGE |

560

| INPUT/OUTPUT I/F | COMMUNICATION I/F |
|---|---|

540

550

# INTERNATIONAL SEARCH REPORT

International application No.

PCT/JP2022/030801

**A. CLASSIFICATION OF SUBJECT MATTER**

***G06F 21/44*(2013.01)i**

FI: G06F21/44

According to International Patent Classification (IPC) or to both national classification and IPC

**B. FIELDS SEARCHED**

Minimum documentation searched (classification system followed by classification symbols)

G06F21/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-282295 A (SANGAKU RENKEI KIKO KYUSHU KK) 07 October 2004 (2004-10-07) abstract, claim 4, paragraphs [0053], [0071]-[0090], fig. 4 | 1-20 |
| Y | JP 2000-286830 A (SEIKO EPSON CORP) 13 October 2000 (2000-10-13) paragraphs [0028]-[0049], fig. 1 | 1-20 |
| A | JP 2009-129321 A (HITACHI LTD) 11 June 2009 (2009-06-11) paragraphs [0121]-[0125], fig. 9 | 1-20 |

☐ Further documents are listed in the continuation of Box C. ☑ See patent family annex.

| | |
|---|---|
| * Special categories of cited documents: | |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| | |
|---|---|
| Date of the actual completion of the international search | Date of mailing of the international search report |
| **14 September 2022** | **27 September 2022** |

| | |
|---|---|
| Name and mailing address of the ISA/JP | Authorized officer |
| Japan Patent Office (ISA/JP) 3-4-3 Kasumigaseki, Chiyoda-ku, Tokyo 100-8915 Japan | |
| | Telephone No. |

Form PCT/ISA/210 (second sheet) (January 2015)

<table>
<tr><td colspan="2" align="center">**INTERNATIONAL SEARCH REPORT**<br>Information on patent family members</td><td colspan="2">International application No.<br><br>**PCT/JP2022/030801**</td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td>JP 2004-282295 A</td><td>07 October 2004</td><td>US 2006/0143453 A1<br>paragraphs [0197]-[0213], fig.<br>8<br>KR 10-2005-0117478 A</td><td></td></tr>
<tr><td>JP 2000-286830 A</td><td>13 October 2000</td><td>(Family: none)</td><td></td></tr>
<tr><td>JP 2009-129321 A</td><td>11 June 2009</td><td>(Family: none)</td><td></td></tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4344783 B